# EUROPEAN PATENT APPLICATION

(11) **EP 1 391 712 A1**
(43) Date of publication of application: **25.02.2004**
(21) Application number: 01919950.4
(22) Date of filing: 16.04.2001
(51) Int. Cl.: G01N 1/06

(54) **DEVICE FOR MANUFACTURING THIN SLICE PIECE OF BIO−TISSUE**

(71) Applicant: Institute of Whole Body Metabolism, Inba-gun, Chiba 270-1407 (JP)
(72) Inventor: SHIGEMATSU, Akiyo, Chiba 270-1436 (JP); MOTOJI, Naomi, Inzai-shi, Chiba 270-1356 (JP)
(74) Representative: HOFFMANN - EITLE
(86) International application number: PCT/JP2001/003239
(87) International publication number: WO 2002/088668

(57) **Abstract**

The invention relates to a technique of cultivating thin pieces of bio-tissue for a long period of time while maintaining the freshness thereof.

There is provided a device for manufacturing thin slice pieces of bio-tissue, which includes a loading table, on which there is provided an upper lid that has slits formed therein for permitting the passage of blade members therethrough and there is also provided between the loading table and the upper lid a core having slits formed therein for permitting the passage of the blade members therethrough. The thin slice pieces of bio-tissue may be obtained by having a living-body specimen loaded on the loading table of a specimen transfer part and moving the living-body specimen toward the blade members and then cutting it off. Those thin slice pieces of bio-tissue may alternatively be obtained by having a living body specimen loaded on the loading table of a fixed specimen-retaining part and moving the blade members in an up-and-down direction. Furthermore, in order to take out the thin slice pieces of bio-tissue from the slicer, it is possible to use a film frame having pasted thereon a film that is to be inserted into the slits.

## Description

### TECHNICAL FIELD

The present invention relates to a device for manufacturing thin slice pieces of bio-tissue, which enables mass-production of fresh thin slice piece specimens of bio-tissue that are intended to undergo synchronized cultivation for a long period of time.

### BACKGROUND ART

The inventors of this invention invented a method of manufacturing a specimen of bio-tissue and a device for manufacturing a specimen of bio-tissue, both of which, when manufacturing thin slice piece specimens of bio-tissue, used ceramic-made cutting blade members as the cutting blade members for slicing a relevant living-body tissue, and applied for a patent in Japanese Patent Application No. H11-323094.

Namely, the above-described method of manufacturing a specimen of bio-tissue and the above-described device for manufacturing a specimen of bio-tissue are the ones each of which uses a technique that is, using a combined unit of cutting blade members, the cutting blade members being each constructed using ceramic material, the combined unit being constructed using two or more plate-like cutting blade members each of that has the same straightforward-linear or curvilinear configuration and that are retained at prescribed space intervals and in parallel with one another, to cut a block of bio-tissue into thin slice pieces of a prescribed thickness to obtain thin slice pieces of bio-tissue, then inserting into the gaps between the cutting blade members pushing members the thickness of that permits the insertion thereof into those gaps, and then pushing the thin slice pieces of bio-tissue from between the cutting blade members.

The above-described invention has the feature that, by using the device for manufacturing a specimen of bio-tissue with the use of the ceramic-made cutting blade members, even when cultivating for a relatively long period of time, it is possible to obtain thin slice piece specimens of bio-tissue the cells of that are maintained morphologically stable.

However, the following problems were recognized in the above-described device. The first problem is that the thin slice pieces of bio-tissue which are cut off are pinched by and in the gaps between the plate-like cutting blade members and they are moved in the rotation direction of the cutting blade members to be uplifted. As for the cells that were cut off and that have been uplifted by the rotation of the cutting blade members, there is involved therein the problem that their configuration gets changed and the cells get morphologically changed. Namely, there exists the fear that, in the manufacture of thin cellular slice pieces of bio-tissue, the organic thin slice pieces that were cut off become morphologically different specimens each time the cut-off operation is performed. Regarding the above-described device for manufacturing thin slice pieces of bio-tissue, a type of device for manufacturing thin slice pieces of bio-tissue is desired which enables even an ordinary operator to manufacture thin slice pieces of specimen that have sufficient reproducibility.

Secondly, while manufacturing thin slice pieces of bio-tissue is performed by synchronized movement of the rotation of the cutting blade members in one direction and the movement of the specimen transfer member, there is needed a contrivance of transferring a large quantity of the manufactured thin slice pieces of bio-tissue from the specimen transfer member at one stroke to a germ-free closed type small-sized vessel in a short period of time. This is because, when the treating time after the bio-tissue are cut off becomes long, the freshness of the thin slice pieces of bio-tissue is abnormally degraded, with the result being that the initially intended purpose of maintaining that freshness for a desired period of time is lost.

Thirdly, the problem is concerned, when a large quantity of thin slice pieces of bio-tissue are manufactured at one stroke, with how each thin slice piece can be distributed and stored one by one into a separate cultivation tool. Unless this problem is solved, the amount of time from the extraction of bio-tissue from a living body to the commencement of the cultivation of each thin slice piece through the manufacture of the thin slice pieces of bio-tissue becomes large, resulting in the degradation of freshness of the bio-tissue.

Fourthly, the problem is concerned with damaging of the thin slice pieces of bio-tissue by the reciprocating movement of the cutting blade members. Namely, the specimen transfer member is equipped with a sliding device for making a stable back-and-forth, horizontal movement of it, and, by this smooth, stable advancing movement, it permits the tips of the circular disk-like cutting blade members that are being rotated to be inserted into the front and near slits formed in the lid, and thereby causes cutting of the bio-tissue block to obtain thin slice pieces of bio-tissue. Since those slits are not formed throughout the entire lid, the specimen transfer member cannot but be stopped at the position where the slits terminate.

After that stop, as the next operation, because the relevant loading table cannot be withdrawn off from the specimen transfer member by causing it to continue to further slide forward, the loading table is slided reversely and withdrawn. If the loading table is reversely withdrawn, the thin slice pieces are brought to the state of their damages getting substantial due to the passages made twice by the cutting blade members. Also, for withdrawing the loading table off from the specimen transfer member, such operations as removing the lid and loading table, etc. must be additionally performed. This becomes a factor in degrading the freshness of the thin slice pieces of bio-tissue. Also, for maintaining the freshness of the tissue, the entire slicer having the cutting blade members is put in a cooling dish that has been cooled. However, at this time, it is necessary to make the size of that cooling dish, especially the length thereof, two times or more as large. If done so, the broadness goes a lot beyond the one that is reasonable as a device for manufacturing thin slice pieces of bio-tissue, and whereby the slicer therefore becoming very deficient in terms of economy. Furthermore, when the loading table is returned to its starting position, because the cutting blade members again pass by the cut surfaces of the tissue, this results in substantially degrading the freshness of the thin slice pieces after the cutting the bio-tissue.

The present invention has been made in order to solve the above-described points of problem. Namely, the object of the present invention is to provide a device (also called "a slicer") for manufacturing thin slice pieces of bio-tissue the freshness of that is high, which, when manufacturing from a cellular bio-tissue structure that has been cut out thin slice pieces of bio-tissue by slicing it using ceramic-made cutting blade members, doesn't cause the movement of the specimen of bio-tissue jointly with the rotation of the cutting blade members, enables transferring a large quantity of the manufactured thin slice pieces of bio-tissue from the loading table of the specimen transfer member to a germ-free closed type small-sized vessel, in a short period of time, and further enables distributing and storing a large quantity of the manufactured thin slice pieces of bio-tissue, one by one, in a short period of time, into a relevant separate cultivation tool.

### DISCLOSURE OF THE INVENTION

The present invention provides a device for manufacturing thin slice pieces of bio-tissue, which includes a loading table, on which there is provided an upper lid that has slits formed therein for permitting the passage of cutting blade members (hereinafter referred to simply as "the blade members") therethrough and there is also provided between the loading table and the upper lid a core having slits similarly formed therein for permitting the passage of the blade members therethrough. The specimen transfer part is moved toward the blade members while a living-body specimen is loaded thereon. However, alternatively, in place of the specimen transfer part, it is also possible to use a specimen retaining part that is fixed and, by moving the blade members in the up-and-down direction, thereby to obtain thin slice pieces of bio-tissue. At this time, the present invention provides a device for manufacturing thin slice pieces of bio-tissue the freshness of that is high, which includes a specimen retaining part, on which there is provided a box-shaped lid that has slits formed therein for permitting the passage of blade members therethrough and there is also provided, between the loading table of the specimen retaining part and the box-shaped lid, a core having slits similarly formed therein for permitting the passage of the blade members therethrough.

Namely, as for the device that is used for manufacturing thin slice pieces of bio-tissue by moving a specimen of bio-tissue toward the rotating blade members and cutting it off, there is provided a device for manufacturing thin slice specimens of bio-tissue, which includes a plurality of blade members each of that is shaped like a circular disk and has a ceramic-made blade on the circumference thereof, a blade member-supporting shaft that retains the circular disk shaped blade members at prescribed space intervals and in parallel with one another so that they are coaxially rotatable, a specimen transfer part that is retained so that the blade members can be inserted thereinto and is movable, and a box-shaped upper lid that is disposed on a loading table of the specimen transfer part, wherein the top plate, as well as the side plates in the movement direction, of the box-shaped upper lid has slits formed therein for permitting the passage of the blade members. As for the plurality of blade members, it is preferable to use the ones with the diameters being the same.

In the above-described device, it is possible to use a core in order to obtain a large quantity of thin slice pieces of bio-tissue by one operation. The core includes a fixing member for fixing the core onto the loading table of the specimen transfer part, a specimen supporting plate for having loaded thereon a living-body specimen, slits that are formed in two side surfaces, opposing each other, of the core and in the specimen supporting plate with the number of the slits being the same as the number of the blade members, and a folding mechanism such as a hinge that is provided in the vicinity of a center of each of two side surfaces, adjacent to each other, of the core, wherein the core is disposed on the specimen transfer part so that the slits are oriented in the same direction as the movement direction of the specimen transfer part.

Further, for taking out a large quantity of the manufactured thin slice pieces of bio-tissue in a short period of time, it is possible to use a film frame for inserting films into between the thin slice pieces of bio-tissue. The film frame retains films the number of that is the same as the number of the slits of the upper lid and that are intended to be inserted into the slits formed in the upper lid. After cutting the living-body specimen, the film frame is disposed on the upper lid.

Next, as for the device that is used in a case of manufacturing thin slice pieces of bio-tissue by fixing a living-body specimen and, by moving the blade members, that are being rotated, in an up-and-down direction, cutting the living-body specimen off, there is provided a device for manufacturing thin slice specimens of bio-tissue, which includes a plurality of blade members each of that is shaped like a circular disk and has a ceramic-made blade on the circumference thereof, a blade member-supporting shaft that retains the circular disk-shaped blade members at prescribed space intervals and in parallel with one another so that they are coaxially rotatable, a moving mechanism that moves in an up-and-down direction the blade member-supporting shaft as well as the plurality of blade members, a specimen retaining part that retains living-body specimens being disposed so that the blade members are inserted thereinto, and a box-shaped lid that is disposed on a loading table of the specimen retaining part, whrein slits permitting the passage of the blade members therethrough are provided in the surface of the box-shaped lid disposed on the loading table of the specimen retaining part. As for the multiple circular disk-shaped blade members, preferably, each has the same diameter. Also, the surface of the box-shaped lid, preferably, for providing easy passage of the circular disk-shaped blade members therethrough, has a concavo-surface.

And, for obtaining a large quantity of the thin slice pieces of bio-tissue by one operation, it is possible to use a core. That core includes a fixing member for fixing the core onto the loading table of the specimen transfer part, a core supporting plate for having the core loaded thereon, slits that are formed in two side surfaces, opposing each other, of the core and in the specimen supporting plate where the number of the slits is the same as the number of the blade members, and a folding mechanism such as a hinge that is provided in the vicinity of a center of each of two side surfaces, adjacent to each other, of the core, wherein the core is disposed on the specimen transfer part so that the slits are oriented in the same direction as the rotation direction of the blade members. At this time, the core is preferably is disposed, to form a concave-surface, on the loading table for easy passage of the circular disk-like blade members therethrough.

Further, for taking out a large quantity of the manufactured thin slice pieces of bio-tissue in a short period of time, it is possible to use a film frame for inserting sheets of film into between the thin slice pieces of bio-tissue. The film frame retains films that are to be inserted into the slits formed in the box-shaped lid and the number of the films is the same as the number of the slits of the box-shaped lid. After the living-body specimen is cut, the film frame is disposed on the box-shaped lid.

The width of each of the slits of each of the upper lid, box-shaped lid, and core preferably is in a range of from 1.2 times inclusive to 3.0 times inclusive of the thickness of a blade member. Also, the space interval between the slits of each of the upper lid, box-shaped lid, and core preferably is in coincidence with the space interval between the blade members.

### BRIEF DESCRIPTION OF THE DRAWINGS

Fig. 1 is a view illustrating an example of a device for manufacturing thin slice pieces of bio-tissue, which uses a specimen transfer part;
Fig. 2 is a view illustrating a portion of blade members in Fig. 1;
Fig. 3(a) is a view illustrating an example of an upper lid that is placed on the specimen transfer part;
Fig. 3(b) is a view illustrating an example of a loading table of the specimen transfer part;
Fig. 4 is a view illustrating an example of a fixing member that is provided on the bottom of the loading table of the specimen transfer part in order to fix a core;
Fig. 5 is a view illustrating an example of the structure of the core;
Fig. 6 is a view illustrating a state where a specimen of a living-body block is loaded on the core;
Fig. 7 is a view illustrating a state where the side surfaces of the core are opened by means of hinges;
Fig. 8 is a view illustrating an example of a film frame;
Fig. 9 is a view illustrating a state where thin slice pieces of bio-tissue that have been cut off are isolated from each other by means of the sheets of film;
Fig. 10 is a view illustrating an example of a device for manufacturing thin slice pieces of bio-tissue, which is arranged to cut a specimen of living body off by moving the blade members up and down;
Fig. 11 is a view illustrating a portion of blade members in Fig. 10;
Fig. 12 is a view illustrating an example of a box-shaped lid;
Fig. 13 is a view illustrating a state where the core is disposed on the loading table; and
Fig. 14 is a view illustrating an example of the structure of the core.

### DETAILED DESCRIPTION OF THE PREFERRED EMBODIMENTS

Next, the present invention will be explained on the basis of its embodiment.

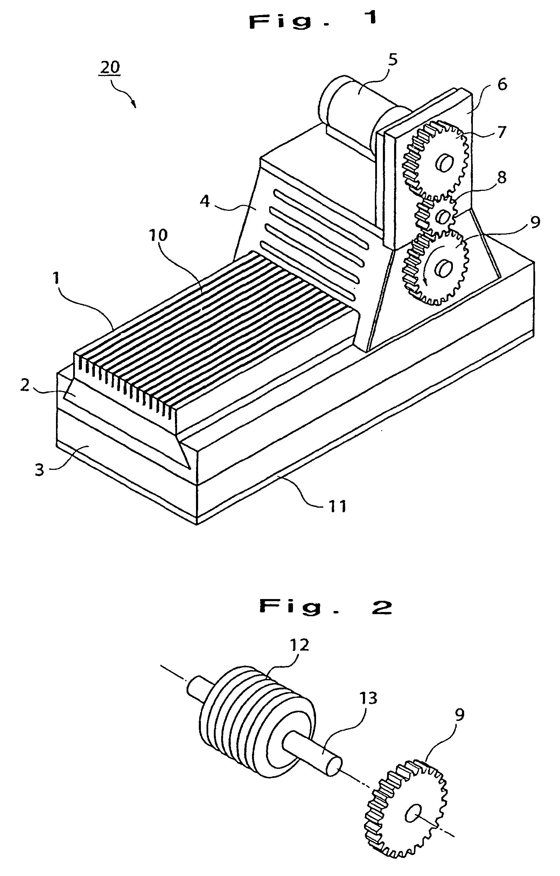

Fig. 1 illustrates an example of a device for manufacturing thin slice pieces of bio-tissue, wherein a specimen of living body is loaded on a loading table of a specimen transfer part; and the specimen is then moved and is thereby brought into contact with a plurality of circular disk-like blade members that are kept rotating to cut it off.

A device (slicer) 20 for manufacturing thin slice pieces of bio-tissue is equipped with a plurality of blade members 12 each of which has a circular disk-like configuration with the diameter being the same and which has a ceramic-made blade on its circumference, a blade member-supporting shaft 13 which retains the circular disk-like blade members at prescribed space intervals in parallel with one another so that they are coaxially rotatable, a specimen transfer part 3 that is retained so that the blade members may be inserted thereinto and that is movable, and a box-shaped upper lid 1 that is disposed on a loading table 2 of the specimen transfer part 3.

As for the blade member 12, a plurality of pieces thereof are retained on and by the blade member-supporting shaft 13 and the blade member is made rotatable. The rotation of the blade member is effected by a motor 5 via a plurality of gears 7, 8, and 9. The blade member-supporting shaft 13 is retained by a driving part-supporting plate 6 and is covered by a safety cover 4. On the bottom of the slicer 20, there is provided an anti-skid member 11.

A specimen of living body is placed on the loading table 2 and is moved toward the blade members 13 by the specimen transfer part 3. The specimen of living body is brought into contact with the blade members 12 that are kept rotating thereby to become thin pieces. At this time, the phenomenon is not observed where the specimen of living body sticks onto the blade members that are kept rotating and is uplifted, and therefore no damage is caused to the specimen of living body. In the case of conventional slicer, the phenomenon was observed where the specimen sticks onto the rotating blade members and is uplifted, and this phenomenon has been a factor in causing damage to the specimen of living body.

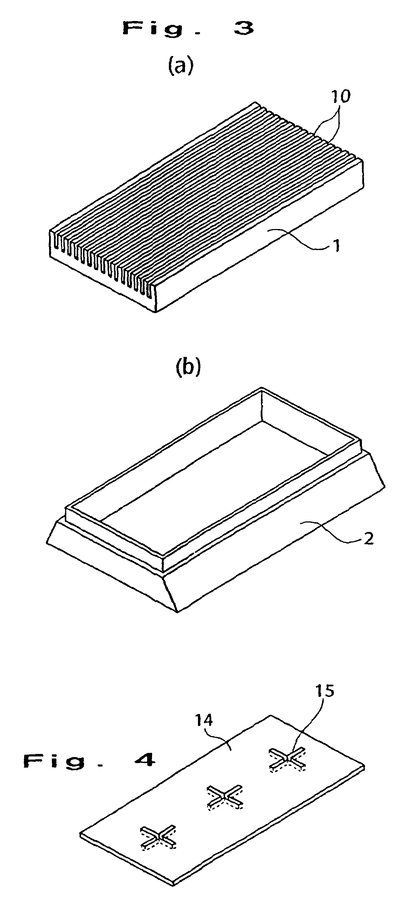

The upper lid 1 is shaped like a box and is disposed on the loading table 2 of the specimen transfer part 3 of the slicer 20. In the top plate of the upper lid 1 as well as the side plates in the direction of the movement, as illustrated in Fig. 3, slits 10 that enable the passage of the blade members therethrough are provided in a number that is the same as the number of the blade members. The slits 10 are provided throughout the entire top plate and are provided up to the midway of each side plate of the upper lid 1. Regarding the slits 10, the number of the slits is the same as the number of the blade members, the space interval between the slits is in coincidence with that between the blade members, and the width of each of the slits is the one that is needed for the blade member to pass therethrough. It is preferable that the width of the slit be made from 1.2 times inclusive to 3.0 times inclusive as large as the thickness of the blade member. The number of the slits preferably is made to be the same as the number of the blade members. Although the former may be not the same as the latter, in that case, it is likely that the specimen will not be effectively cut off and waste will occur.

By providing the upper lid 1, it ceases to happen that the specimen is uplifted by the rotation of the blade members, thereby it is possible to obtain thin slice pieces of bio-tissue that are less damaged.

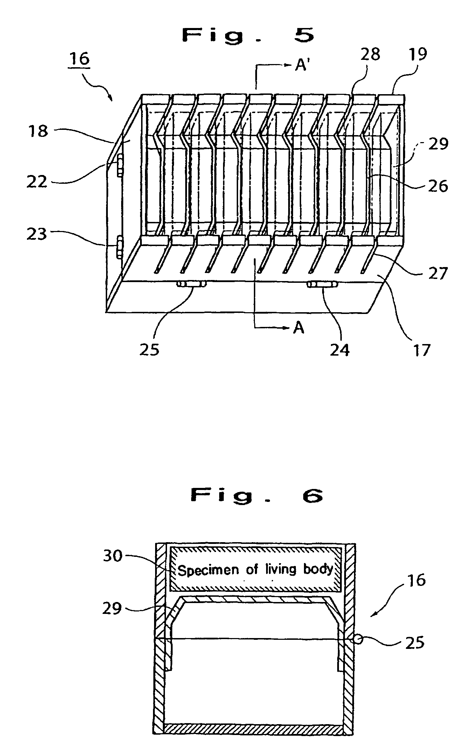

Next, in the present invention, a core is used for manufacturing a large quantity of thin slice pieces of bio-tissue at one operation by cutting off a block of bio-tissue. An example of the core is illustrated in Fig. 5. The core 16 is shaped like a box and has provided in the slightly upper vicinity of a central part thereof a specimen-supporting plate 29. The core 16 is disposed on the loading table 2 of the specimen transfer part 3. The core 16 may be provided in one in number but can be provided in two or more in number. If a plurality of cores are provided, it is possible to obtain by one operation thin slice pieces of bio-tissue the number of that is larger by that extent. The core 16 has its fixing tool, not shown, connected to a fixing tool 15 provided on a bottom portion 14 of the loading table 2, whereby the core 16 is fixed to the loading table 2 (Fig. 4).

It is arranged that the position through which the lowermost ends of the circular disk-like blade members 12 pass be at the height of the intermediate portion of the core 16. Although depending on the number of, and the space interval between, the circular disk-like blade members 12, the width of the core 16 is made to be such that it permits all the blade members to sufficiently cover the entire width of the block of fresh bio-tissue. On the specimen-supporting plate 29, there is placed the block of living body specimen 30 so that that block may be correctly placed. In the side surface wall of the core 16, there are formed slits at the position thereof where the blade members pass. In Fig. 5, in a side surface wall 17 and a side surface wall 19, there are provided slits 27 and slits 28, respectively. Further, in the specimen-supporting plate 29 as well, there are also formed slits 26. While the core 16 is incorporated into the loading table 2, demounting thereof is easy and, after the termination of the slicing of thin pieces, the thin slice pieces can be transferred, using a pincette, to a germ-free small-sized vessel.

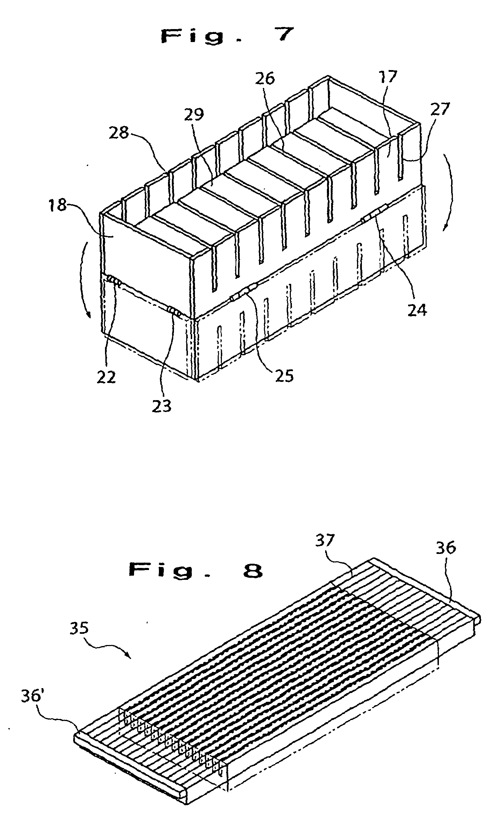

In Fig. 5, in the vicinities of centers of adjacent side surfaces, i.e. a side surface 18 and a side surface 17, of the core 16, there are attached a pair of hinges 22 and 23 and a pair of hinges 24 and 25, respectively. Upper half portions of the respective side surfaces can be folded in toward outside the core by means of the hinges. These hinges are the ones that make easy the operation of taking out the thin slice pieces of bio-tissue from the slicer 20. The hinges act to fold back generally the upper half portion of the side surface of the core and, other than those hinges, it is needless to say that it is possible to use a tool that has a folding-back mechanism. Fig. 7 illustrates a state where the upper half portions of the side surfaces 17 and 18 of the core 16 have been folded back forward outside the core. By the hinges 24 and 25, in case of the side surface 17, and by the hinges 22 and 23, in case of the side surface 18, the corresponding side surface is folded back toward the outside of the core. Fig. 6 is a view taken along a line AA' of Fig. 5 and there is illustrated a state where the specimen of living body 30 is placed on the specimen-supporting plate 29 provided in the core 16.

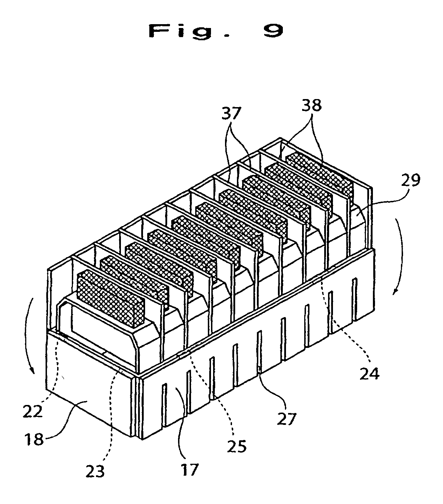

For easy take-out of the thin slice pieces of bio-tissue, a film frame 35 can further be provided on the upper lid 1. As illustrated in Fig. 8, the film frame 35 is a retaining frame for retaining a film 37 that is to be inserted into the corresponding slit 10 of the upper lid 1. The film is retained by the film frame 35 in the state of its being tensioned downward. The film is pulled to be in a tensioned state by supporting frames 36 and 36' that are located at the both ends of the film frame 35. The number of the films is the same as the number of the slits 10 of the upper lid. The space intervals at which the films are tensioned are each the same as the space interval at which the blade member is disposed and that at which the slit 10 is formed.

After the specimen of living body is cut into thin slice pieces by the circular disk-shaped blade members, the film of the film frame is inserted into the slit 10 of the upper lid 1. The length of the film frame 35 as viewed in the lengthwise direction thereof is made to be the length that is slightly longer than that of the upper lid 1 as viewed in the lengthwise direction thereof. As for the film that is used, it is possible to use a cellophane film or a plastic film. Among all, a film that is made of polyfluoro ethylene (tradename is Teflon) can suitably be used because of its small friction. This film frame 35, while its films are kept in positional coincidence with the slits 10 of the upper lid 1, is allowed to drop from up to down. Through this operation, the thin sheets of film are all fitted into the slits of the slits 10.

Next, each film is separated away, by a pair of scissors for ophthalmology or cutter knife, along the back and front side plates of the upper lid, after which that film frame 35 is removed away. Subsequently, the upper lid is removed away and the thin film that is tensioned at the back and front of the respective core 16 is separated away by using a pair of small-sized scissors. Then the core 16 is received in a vessel free of germs and then is moved to the next clean bench.

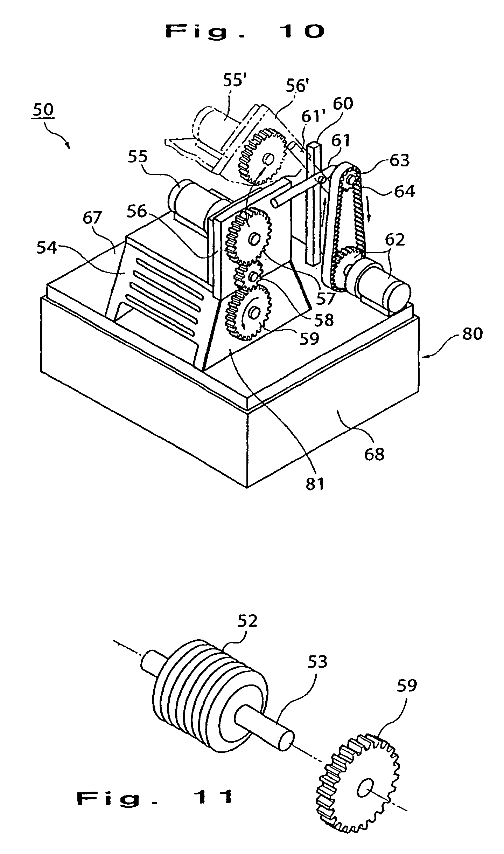

When unlocking the latches (not illustrated) on the side surfaces of the core 16 and by opening the upper half portions of the side surfaces toward outside the core dropping them downward, from the core that has been opened there are observed the figures of the thin slice piece of bio-tissue, film, and thin slice piece of bio-tissue that has been cut off by the next core in the order mentioned. By pinching the edge end of the film by a pincette, each of those materials, i.e. each of the thin slice pieces of bio-tissue is allowed, sheet by sheet, to drop into the cultivation liquid within the cultivation tool. The amount of time that is needed to distribute 9 sheets of thin slice is to an extent of one minute. The state of the thin slice pieces of bio-tissue when the latches (not illustrated) on the side surfaces of the core 16 is removed isillustrated in Fig. 9.

The upper half portion of each of the side surfaces 17 and 18 of the core 16 is folded back toward the outside of it. On the specimen-supporting plate 29, there is placed the specimen of living body 38 that has become the thin slice pieces. And, between the respective thin slice pieces, there are inserted the films 37. These films 37 are the ones that had been tensioned by the film frame. The specimen of living body that has become the thin slice pieces can easily be taken out by removing the films 37, away, which isolate the respective thin slice pieces from one another.

The foregoing description has given an explanation of a device for obtaining thin slice pieces of bio-tissue while the specimen of living body is moved, by using specimen transfer part, toward the blade members that are kept rotating. Manufacturing thin slice pieces of bio-tissue can be performed also by moving the blade members in, for example, an up-and-down direction while the specimen of living body is not moved and is fixed. Hereinafter, an explanation will be given of a device for manufacturing thin slice pieces of bio-tissue by moving the blade members in the up-and-down direction. Basically, the case with a device for manufacturing thin slice pieces of bio-tissue by moving the blade members in the up-and-down direction is also the same as that with a device for manufacturing by moving the specimen of living body.

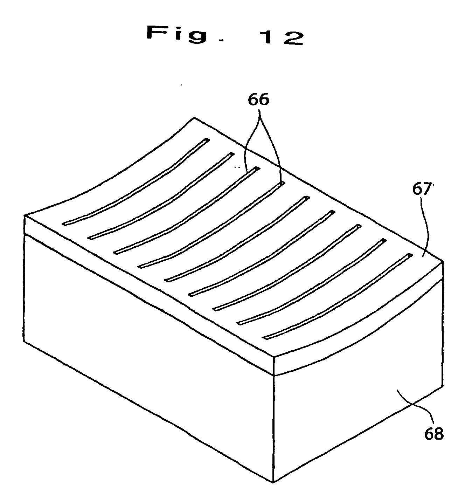

Fig. 10 illustrates an embodiment wherein there is illustrated a device for manufacturing thin slice pieces of bio-tissue by moving the blade members in the up-and-down direction. Under a specimen cutting-off part 81 that is equipped with the blade members 52, blade member-supporting shaft 53 that retains those blade members at prescribed space intervals in parallel so that they may be rotatable, etc., there is connected the specimen-retaining part 80 for fixing the specimen of living body. The blade member-supporting shaft 53 is fixed to the driving part-supporting plate 56, and the power of a motor 55 is transmitted to it by way of the gears 57, 58, and 59. The part where the blade members 52 is stored is protected by the safety cover 54. The part of blade members is illustrated in Fig. 11. The motor-driven part-supporting plate 56 is made movable in the up-and-down direction for cutting off the specimen of living body. The driving part-supporting plate 56 is moved in the up-and-down direction by the arm 61 that is provided on the support column 60. The arm 61 is made movable in the up-and-down direction by moving a pulley 63 via a connection belt 64 by the power of a pulley motor 62. Incidentally, a motor 55', driving part supporting plate 56', and arm 61' illustrate a state of their having been moved to their upper position. Here, the mechanism for moving the blade member in the up-and-down direction is the one that the movement of up-and-down moves them in a circular arc by using the arm. However, the invention is not limited thereto. That mechanism may be the one that moves the driving part supporting plate along the supporting column vertically with respect thereto.

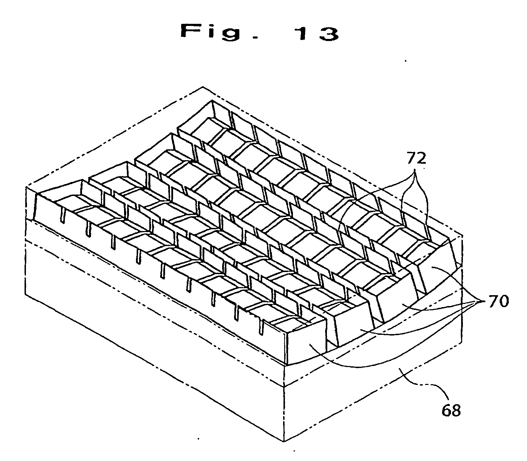

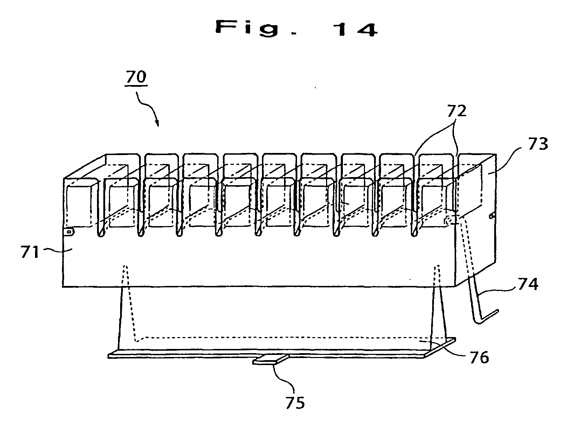

The specimen-retaining part 80 is equipped with a loading table 68 and a box-shaped lid 67 that is disposed on the loading table 68. Further, within the loading table 68, there can be disposed a core 70. Fig. 12 illustrates the loading table 68 for fixing the specimen and the box-shaped lid 67. Fig. 13 illustrates the core 70 that is disposed within the loading table 68. Fig. 14 illustrates the details of the core 70.

The box-shaped lid 67 has slits 66 provided for permitting the blade members 52 to pass through when the blade members are moved in the up-and-down direction. For permitting the blade members 52 to pass through the slits 66 of the box-shaped lid 67, it is preferable that the surface of the box-shaped lid 67 has a curvature that is in coincidence with that of the blade members 52. By the blade members' moving through those slits 66, the specimen of living body placed in the specimen-fixing member 80 is cut off into thin slice pieces. The number of the slits 66 is the same as that of the blade members 52. Also, the space intervals between those slits 66 are each the same as those between the blade members 52, and, preferably, the width of the slit 66 is made approximately 1.2 times to approximately 3.0 times as large as the thickness of the blade member 52.

The box-shaped lid 67 is placed on the loading table 68. In the loading table 68, there can be provided the core 70. The structure of the core 70 is illustrated in Fig. 14. In Fig. 14, depiction is made of a state where the thin slice pieces of bio-tissue are placed in the core 70. The core can be provided in a plurality of pieces. The number of the cores 70 can suitably be determined taking into consideration the size of the desired thin slice pieces of bio-tissue, the number thereof, the number of the blade members, etc. In any case, by using the core, it is possible to simultaneously manufacture a large quantity of thin slice pieces of bio-tissue. Conventionally, slice pieces were manufactured on a one-by-one basis. Compared to that, the device of the present invention has a feature in that a large quantity of thin slice pieces of bio-tissue can be simultaneously manufactured.

The core 70, as in the case of the core in Fig. 5, has slits 72 formed therein that are for permitting the blade member 52 to pass therethrough. The space interval between those slits 72 is the same as that between the blade members 52, and, preferably, the width of those slits 72 is made approximately 1.2 times to approximately 3.0 times as large as the thickness of the blade member 52. Preferably, the number of the slits 72 is in coincidence with the number of the blade members 52. On the upper surface of the core, there is placed a specimen of living body.

The core 70 is disposed on the loading table 68. First, a core-retaining plate (not illustrated) is placed on the loading table 68 and, on that core-retaining plate, there is placed the core. Namely, a core-supporting bed 76 is disposed and fixed on the core-retaining plate by means of fixing tools 75, and, on that core-supporting bed, there is disposed the core 70. In the core 70, there are formed slits 72 the number of that is the same as that of the blade members 52. The core 70 is equipped with a spring 74 for fixing the core 70. Although not illustrated, the core 70 is equipped with hinges as in the case of the core illustrated in Fig. 5 and it is arranged so that the upper half portions of the mutually adjacent side surfaces, i.e. side surfaces 71 and 73, of the core 70 be opened toward outside the core. The hinges are used to function to fold back the generally upper half portions of the side surfaces of the core. Other than those hinges, it is possible to use a tool that has the folding-back mechanism. The method of using the core 70 and the effect brought about by the use of it are the same as those in the case of the core illustrated in Fig. 5.

The state where the core 70 is disposed in the loading table 68 is illustrated in Fig. 13. While the core 70 is disposed on the loading table 68 in a plurality of pieces, at this time the core 70 is disposed on the loading table 68 with a curvature that is generally the same as that which was provided in the box-shaped lid 67. The core 70 is disposed in such way that the slits 72 thereof are arrayed in the same direction as the slits 66 of the box-shaped lid 67 and the slits 72 and slits 66 are in positional coincidence with each other. The blade members 52 pass through the slits 66 and slits 72 to reach the specimen of living body and cut it off. At this time, the greater the number of the used cores is, the larger there is obtained at one operation the quantity of thin slice pieces of bio-tissue.

After cutting off the specimen of living body, on the box-shaped lid 67 there is placed the film frame as illustrated in Fig. 8. By doing so, it is possible to easily take out thin slice pieces of bio-tissue.

### Examples

Hereinafter, the present invention will be explained in stepwise with reference to the Examples of the invention.

### Example 1

The keeping-alive capability of a mammal organ is greatly affected by a perfusion technique. For preventing the visceral organ, such as the liver or intestine, from undergoing blood coagulation, heparin treatment is performed. At this time, if injecting heparin from the inguinal, or tail-end, vein, complete perfusion is impossible. Accordingly, heparin is injected from the iliac vein or penile vein which is located at the part, as lower as possible, of the lumbar vertebra and which undertakes the venous blood that, among the entire venous blood of a rat (body-weight is 200g), flows into the liver by way of the portal vein. Also, when performing liver extraction, after ligating the hepatic artery, gastric artery, splenic artery, portal vein, inferior vena cava, etc. as the before-extraction treatment, while injecting buffer such as a cold Ringer's 10 ml (in case of a rat) solution of acetic acid (0°C) from the liver inlet, the processing is performed of opening the thorax and then cutting out the apex of the heart with a pair of scissors. Incidentally, the extracted liver is stored (for approximately 5 minutes or less) in an ice of sherbet-like configuration until the next treating operation. At this time, the weight of the extracted liver was 5.5 g. The color after the extraction was pink.

### Example 2

The first sheet of the rat liver was excised. From the outlet of the hepatic vein toward the forward end of the liver sheet, three rectangular liver blocks, each of that was 5 mm in width and approximately 30 mm in length, were prepared using a ceramic cutter. These liver blocks were placed, respectively, upon three cores attached to the loading table of the slicer. The slicer was placed at the center of a large-depth dish that was made using Teflon, etc. so that those blocks may be sufficiently immersed in a 0°C solution of buffer. Then, the dish was filled with the solution of buffer. Then, the upper lid was applied over the loading table. In the top plate of the upper lid there were formed the slits that extended in parallel and that extended in the back-and-forth direction. The space interval between each of the slits was in coincidence with the space interval between each of the blade members of the slicer. The former space interval was also in coincidence with that between each of the slits of the core installed on the loading table. Through the rightward rotation of the blade members of the slicer and the advancing movement of the specimen transfer part, the loading table passed completely through under the blade members, whereby the slicing operation was finished. Also, it is possible to cut off the block of bio-tissue while the loading table is kept fixed and by moving downward the driving part of the circular disk-like blade members. In this case, there was obtained the result that is as described in Example 5, and it was possible to obtain a large quantity of thin slice pieces of bio-tissue by one operation.

### Example 3

The slits of the box-shaped upper lid are in coincidence with the slits of the core mounted on the loading table. Through the precise coincidence, plus the narrow space intervals between the circular disk-like blade members, the thin slice pieces of bio-tissue that were cut off can be kept at rest in the position where they were before being cut off, without being pinched away between the blade members. This discovery has turned out to enable simultaneous mass-production of thin slice pieces of bio-tissue and to be of great importance for obtaining thin slice pieces of fresh bio-tissue the life of that continues to be alive. By this Example, 27 thin slice pieces of fresh bio-tissue were obtained at a stroke of one operation.

### Example 4

The thickness of each of thin slice pieces of bio-tissue is as very small as 2 mm for the liver. This smallness in thickness can certainly be made further small if saying from the physical point of view. However, for physiologically preserving the foreign-matter replacing ability, the specific sugar anabolism, etc. of the liver, from the opinion, as well, on the histological form of the liver, it is required that a non-damaged, small sheet of liver tissue has as one unit a diameter of 1000µm (1.0 mm) (approximately 2617 pieces of liver cell). Accordingly, it is preferable, regarding a liver tissue piece of rat liver, that the thickness of it be made at least 2 mm. When distributing that small tissue piece of rat liver into a relevant cultivation tool in a short period of time one by one, after the passage of the blade members through the upper lid, the film frame is put on the upper lid. The film frame having films tensioned therein, the number of that is the same as that of the slits of the upper lid, is placed on this upper lid. The film pieces are inserted into between the thin slice pieces of bio-tissue that have been cut off.

After placing the film frame, a very thin pair of scissors is inserted into the clearance between the film frame and the upper lid to cut off the film. Then the film frame was removed from the loading table together with the upper lid. By this operation, the core incorporated on the upper surface of the loading table appears. The slits of the core have inserted therein the above-described plastic films. Then, the films are separated away, for every core, from one another and then the cores are removed away from the loading table. The cores are then received into the germ-free vessel, which is transferred onto the clean bench. Outside latches of each core are disengaged to cause exposure of the fresh thin slice pieces of bio-tissue. Those pieces are caused to drop, respectively, into the cultivation tools to which 1 ml of culture liquid was added beforehand, by clipping the edges of the films with the use of a needle or pincette. By doing so, the pieces were distributed. Within approximately 1 to 2 minutes, 27 pieces were distributed into their respective cultivation tools and the process was finished.

### Example 5

When the blade members consisting of ceramic material each has the configuration of a circular disk, the box-shaped lid and loading table preferably each has a circular disk-like curved surface coinciding with the circumference of the blade member. Regarding the dynamic relationship between the circular disk-like blade members and the loading table having covered thereover the box-shaped lid, the chain reaction becomes necessary that, while the center shaft that passes through the central parts of the parallel-arrayed circular disk-like blade members is being rotated, interlockingly with the up-and-down movement thereof, so that the circular disk-like blade members may be rotated at 100rpm to 500rpm, causes the driving part connected with that center shaft, or only the center shaft, to gradually move from up to down. And, when the blade members have reached a display of infrared laser at the position of drive stop installed at the central part of the core portion incorporated on the loading table, the downward movement of the center shaft is automatically converted to the upward movement, whereby the center shaft is raised up to the upper designated position of stop where the rotating movement of the center shaft is stopped.

### Example 6

The thin slice pieces of rat liver which were obtained in the preceding Examples 1 to 5 were cultivated each in a culture medium of Waymouth for the time periods of from 24 hours to 48 hours at 20°C. Thereafter, microscopic specimens were prepared using an ordinary method of histological hematoxylin eosin double staining. From the observation of the tissue-cellular image under the optical microscope, from 24 hours inclusive up to 36 hours inclusive, the liver cell, blood vessel, and bile duct cell exhibited transparent nuclei and cytoplasmic granules that indicated sufficiently high keeping-alive capability. Also, using an ordinary liver perfusing technique, the liver was extracted, then that tissue was sliced by an ordinary slicer into thin slice pieces of the liver, then these pieces were cultivated in a culture liquid of Waymouth at 20°C. In this case, in 1 to 4 hours after the cultivation, the pycnosis of the liver cell within the slice piece reached a large-depth inside portion within that slice piece. Compared to this, in the slice piece according to the invention's relevant method, the keeping-alive capability was remarkably recognized.

### INDUSTRIAL APPLICABILITY

Using the present invention, a large quantity of thin slice pieces of bio-tissue which, when they are cultivated for a relatively long period of time, have their cell morphologically preserved sufficiently stably can simultaneously be prepared easily, quickly, and reliably. By using ceramic-made blade members, it is possible to prevent the cell of the cut-surface of the tissue from being damaged. By using the upper lid and core each of that has slits, it is possible to simultaneously and easily obtain a large quantity of thin slice pieces of bio-tissue. Also, by inserting a sheet of film between thin slice pieces of cut-off bio-tissue via a film frame, taking out each of those thin slice pieces of bio-tissue has become very easy. This technique is of great help to make diagnoses and remedies in medical treatments as well as the researches and developments of medication drugs.

## Claims

1. A device for manufacturing thin slice specimens of bio-tissue, comprising a plurality of blade members each of that is shaped like a circular disk and has a ceramic-made blade on its circumference that has the same diameter, a blade member-supporting shaft that retains the circular disk shaped blade members at prescribed intervals and in parallel with one another so that they are coaxially rotatable, a specimen transfer part that is retained so that the blade members can be inserted thereinto and is movable, and a box-shaped upper lid that is disposed on a loading table of the specimen transfer part, wherein the top plate, as well as the side plates in the movement direction, of the box-shaped upper lid has formed therein slits that permit the passage of the blade members.

2. The device for manufacturing thin slice specimens of bio-tissue according to claim 1, further comprising a core that is disposed in the specimen transfer part, the core including a fixing member for fixing the core onto the loading table of the specimen transfer part, a specimen supporting plate for having loaded thereon a living-body specimen, slits that are formed in two side surfaces, opposing each other, of the core and in the specimen supporting plate with the number of the slits being the same as the number of the blade members, and a folding mechanism that is provided in the vicinity of a center of each of two side surfaces, adjacent to each other, of the core, wherein the core is disposed on the loading table of the specimen transfer part so that the slits are oriented in the same direction as the movement direction of the specimen transfer part.

3. The device for manufacturing thin slice specimens of bio-tissue according to claim 1 or 2, wherein a film-retaining frame that retains films that are to be inserted into the slits formed in the upper lid and the number of that is the same as the number of the slits of the upper lid is disposed on the upper lid.

4. A device for manufacturing thin slice specimens of bio-tissue, comprising a plurality of blade members each of that is shaped like a circular disk and has a ceramic-made blade on its circumference that has the same diameter, a blade member-supporting shaft that retains the circular disk-shaped blade members at prescribed intervals and in parallel with one another so that they are coaxially rotatable, a moving mechanism that moves in an up-and-down direction the blade member-supporting shaft as well as the plurality of blade members, a specimen retaining part that retains living-body specimens so that the blade members may be inserted thereinto, and a box-shaped lid that is disposed on a loading table of the specimen retaining part, wherein slits permitting the passage of the blade members therethrough are provided in the surface of the box-shaped lid of the loading table of the specimen retaining part.

5. The device for manufacturing thin slice specimens of bio-tissue according to claim 4, wherein the configuration of the surface of the box-shaped lid is the one like a concavo-surface.

6. The device for manufacturing thin slice specimens of bio-tissue according to claim 4 or 5, further comprising a box-shaped core that is disposed in a plurality of pieces in the specimen retaining part, each box-shaped core including a fixing member for fixing the core onto the loading table of the specimen retaining part, a core-supporting plate for supporting the core on the loading table, slits the number of that is the same as the number of the blade members and that are formed in two side surfaces, opposing each other, of the core and in the specimen supporting plate, and a folding mechanism that is provided in the vicinity of a center of each of two side surfaces, adjacent to each other, of the core, wherein the core is disposed on the loading table of the specimen retaining part so that the slits are oriented in the same direction as the rotation direction of the specimen blade members.

7. The device for manufacturing thin slice specimens of bio-tissue according to one of claims 4 to 6, wherein the core is disposed in the form of a concave-surface on the loading table.

8. The device for manufacturing thin slice specimens of bio-tissue according to one of claims 4 to 7, wherein a film-retaining frame that retains films that are to be inserted into the slits formed in the box-shaped lid and the number of that is the same as the number of the slits of the upper lid is disposed on the box-shaped lid.

9. The device for manufacturing thin slice specimens of bio-tissue according to one of claims 1 to 8, wherein the width of each of the slits of each of the upper lid, box-shaped lid and core is in a range of from 1.2 times inclusive to 3.0 times inclusive of the thickness of the blade member.

10. The device for manufacturing thin slice specimens of bio-tissue according to one of claims 1 to 9, wherein the space interval between the slits of each of the upper lid, box-shaped lid and core is in coincidence with the space interval between the blade members.
